Europäisches Patentamt

European Patent Office

Office européen des brevets

(19)

(11) Numéro de publication: **0 263 468 B1**

# (12) FASCICULE DE BREVET EUROPEEN

(45) Date de publication du fascicule du brevet:
24.10.90

(51) Int. Cl.⁵: **B01D 71/02, C04B 41/50**

(21) Numéro de dépôt: 87114516.5

(22) Date de dépôt: 05.10.87

(54) Membrane de filtration céramique et procédé de fabrication.

(30) Priorité: 10.10.86 FR 8614134

(43) Date de publication de la demande:
13.04.88 Bulletin 88/15

(45) Mention de la délivrance du brevet:
24.10.90 Bulletin 90/43

(84) Etats contractants désignés:
BE CH DE ES FR GB GR IT LI NL SE

(56) Documents cités:
EP-A- 0 040 282
EP-A- 0 136 937
EP-A- 0 141 388
EP-A- 0 188 950
FR-A- 1 517 389
GB-A- 2 097 777

Le dossier contient des informations techniques
présentées postérieurement au dépôt de la demande et
ne figurant pas dans le présent fascicule.

(73) Titulaire: SOCIETE DES CERAMIQUES TECHNIQUES,
65460 Bazet(FR)

(72) Inventeur: Galaj, Stanislas, 27 avenue Lénine,
F-94110 Arcueil(FR)
Inventeur: Besland, Marie-Paule, 201 avenue de la
Justice Résidence des Facultés, F-34100 Saintonge(FR)
Inventeur: Wicker, Alain, 54 rue Vergniaud,
F-75013 Paris(FR)

(74) Mandataire: Weinmiller, Jürgen et al,
Lennéstrasse 9 Postfach 24, D-8133 Feldafing(DE)

## Description

On connaît des membranes de filtration efficaces et peu coûteuses constituées principalement ou exclusivement de grains d'alumine frittée.

On appelle ici membrane une couche filtrante présentant des pores dont le diamètre bien défini détermine le pouvoir séparateur de la membrane. Une telle membrane est fréquemment formée sur une couche support à pores plus grossiers et qui peut être constituée par exemple de grains d'alumine frittée avec ou sans l'aide d'une phase vitreuse, notamment de silicates. Il a été constaté que ces membranes voyaient leur activité de surface modifiée au cours des cycles de filtration. On a notamment constaté des réactions avec la suspension à filtrer et une diminution du débit en service, ceci particulièrement dans les cas où la solution ou la suspension à filtrer renferme des groupements du type phosphate ou des protéines, ou encore d'autres macromolécules présentant de nombreux groupements réactifs. C'est le cas notamment des suspensions contenant de la caséïne et des jus de fermentation alcoolique tels que le vin, le cidre, la bière, etc...

On connaît par ailleurs par la demande de brevet européen EP-A 188 950 une membrane constituée par un support macroporeux et une couche microporeuse superposés. La couche peut être en zircone. Cette solution présente l'inconvénient de nécessiter pour chaque fluide particulier la mise au point d'un procédé de fabrication d'une couche microporeuse constituée du matériau adapté au fluide. Ceci implique la préparation de poudres à granulométrie bien contrôlée en fonction du diamètre de pores désiré, la mise au point d'une méthode de dépose et d'un traitement thermique de frittage.

La présente invention a notamment pour but de réaliser de manière simple et économique une membrane ayant de bonnes propriétés de filtration et les conservant en service plus longtemps que les membranes connues dont la surface est constituée d'alumine, même si la solution ou la suspension à filtrer contient des groupements de l'un des types indiqués ci-dessus.

Elle a plus particulièrement pour but de réaliser une membrane de filtration céramique dont la structure poreuse, le diamètre des pores et la porosité soient pratiquement ceux des membranes connues à base d'alumine frittée, et dont l'activité de surface soit peu modifiée après de nombreux cycles de filtration et de nettoyage.

Et elle a notamment pour objet une membrane de filtration en céramique comportant au moins principalement des grains d'alumine frittés qui sont fixés les uns aux autres par des parties "liées" de leurs surfaces et qui laissent entre eux des pores délimités par les parties restantes "exposées" de leurs surfaces, caractérisée par le fait que lesdites parties exposées des surfaces des grains sont recouvertes d'un film de zircone, continu d'un grain à l'autre et dont l'épaisseur est comprise entre 10 et 1000 nanomètres.

De préférence, ledit film de zircone contient de l'oxyde d'yttrium $Y_2O_3$ en proportion inférieure à 11% en mole par rapport à la zircone $ZrO_2$.

La zircone est chimiquement plus inerte que l'alumine vis-à-vis de la plupart des matières à filtrer, et constitue un film qui isole la matière à filtrer de l'alumine sous jacente.

La tenue mécanique de la structure poreuse ne risque pas d'être altérée par la présence de zircone.

Le film protecteur est suffisamment épais pour assurer une fonction d'isolation, et il est suffisamment souple pour suivre sans se briser les légères déformations des grains d'alumine, notamment lors des variations de température.

L'invention s'applique avantageusement au cas où le diamètre moyen des pores de la membrane où les pores sont les plus petits est compris entre 0,1 et 10 microns environ. Ces pores les plus petits sont ceux de la couche qui assure la filtration, cette couche pouvant être supportée par une autre couche à pores plus grossiers qui assure la résistance mécanique de l'ensemble.

De préférence l'épaisseur dudit film de zircone est comprise entre 0,1 et 10% du diamètre moyen des pores de la membrane. La porosité de la membrane est alors sensiblement celle de la structure poreuse d'alumine.

La présente invention a aussi pour objet un procédé de fabrication de la membrane précédente dans lequel l'étape de formation d'un film de zircone comporte les étapes suivantes:

- réalisation d'une solution zirconifère contenant
- un alcoolate de zirconium,
- un plastifiant, agent de réticulation du film de zircone tel le triéthylène-glycol, le poids de ce plastifiant étant compris entre 5% et 100% de celui de l'alcoolate de zirconium,
- et un solvant constitué d'un alcool, le poids de ce solvant étant compris entre 3 et 20 fois celui de l'alcoolate de zirconium,
- imprégnation de ladite structure de membrane par ladite solution zirconifère, de manière que les pores de cette structure soient remplis par cette solution,
- et une cuisson progressive de cette structure imprégnée de manière à éliminer tous les composants de ladite solution zirconifère sauf la zircone formée à partir de l'alcoolate de zirconium.

De préférence, ledit solvant est l'alcool source dudit alcoolate de zirconium.

De préférence, ledit alcool dudit alcoolate et dudit solvant est le n-butanol, ledit alcoolate étant alors le n-butylate de zirconium.

De préférence encore ladite étape de cuisson progressive comporte elle-même les étapes suivantes:

- séchage à température sensiblement ambiante, à l'air ambiant,
- montée lente en température jusqu'à 350°C environ, la vitesse de montée étant inférieure à 5 degrés Celsius par minute au moins dans les plages de température où se produit un dégagement de gaz provenant de l'évaporation ou de la décomposition des matières organiques de la solution zirconifère,
- montée à une température de cuisson comprise entre 350°C et 1200°C,

- maintien à la température de cuisson pendant au moins 10 minutes environ,
- et refroidissement.

A l'aide des figures schématiques ci-jointes on va décrire plus particulièrement ci-après, à titre d'exemple non limitatif, comment la présente invention peut être mise en œuvre dans le cadre de l'exposé qui en a été donné ci-dessus.

La figure 1 représente deux courbes de variation du débit d'une membrane connue et d'une première membrane de filtration selon l'invention utilisées dans un appareil de filtration du type habituel à flux tangentiel, le débit étant porté en ordonnée en litres par heure et par mètre carré de membrane, le temps étant porté en abscisse en heures.

La figure 2 représente des courbes analogues dans le cas d'une autre membrane connue et d'une deuxième membrane selon l'invention.

Dans un premier exemple de réalisation, le tube filtrant de départ est constitué d'un support macroporeux en alumine (diamètre de pores 15 μm) sur lequel est fixée par frittage une membrane (aussi en alumine) microporeuse (diamètre de pores 0,2 μm) d'une épaisseur de 40 μm.

On réalise une solution de n-butanol comprenant 105 g/l de complexe n-butylate de zirconium/butanol (Zr (OBu)₄, Bu OH) et 70 g/l de triéthylène-glycol. On procède à une immersion lente du tube en alumine dans cette solution. Au bout de quelques secondes le tube est retiré et est soumis à un séchage de quelques heures à l'air ambiant. On procède alors à la cuisson du tube selon le cycle thermique suivant : montée de température lente (1,5°C/mn) jusqu'à 350°C, puis montée à 750°C à la vitesse de 2 à 3°C/mn. La température est alors maintenue pendant 30 mn et l'on procède au refroidissement par coupure de l'alimentation du four.

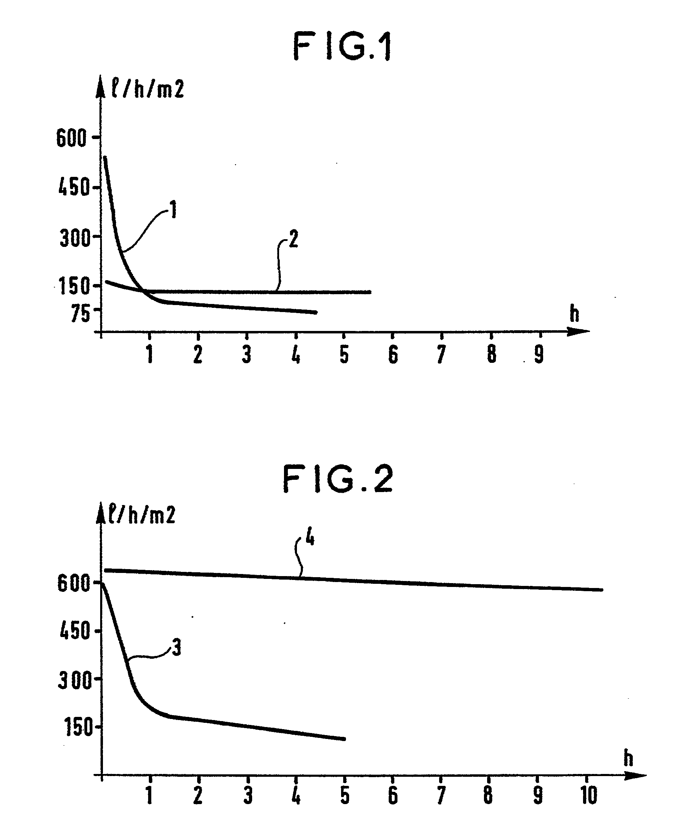

L'épaisseur du film de zircone obtenu varie entre 5 et 10 % du diamètre moyen des pores de la couche dont les pores sont les plus fins à savoir 10 à 20 nm (ceci pour une opération de trempage). Par comparaison avec une membrane connue constituée par le tube filtrant de départ, les conditions de filtration étant identiques, on observe une très nette amélioration des performances de filtration conformément à la figure 1 dans le cas de la filtration du vin. La courbe 1 correspond à la membrane connue et la courbe 2 à la membrane selon l'invention.

Dans un deuxième exemple de réalisation, le tube filtrant de départ est en alumine et comporte des pores de diamètre 5 microns. On réalise une solution de n-butanol comprenant 115 g/l de complexe n-butylate de zirconium/butanol (Zr (OBu)₄, Bu OH), 60 g/l de triéthylène-glycol et de 15 g/l de nitrate d'yttrium anhydre. Après immersion du tube comme précédemment on procède à un traitement thermique : montée lente jusqu'à 350°C (1,5°C/mn) puis montée à 1000°C (2 à 3°C/mn), palier à cette température pendant 30 mn et refroidissement naturel.

L'épaisseur du film de zircone yttriée est inférieure à 1 % du diamètre des pores, à savoir 50 nm (ceci pour une opération de trempage). Par comparaison avec une membrane connue comstituée par le tube de départ, on observe une amélioration très importante des performances dans le cas de la filtration de jus de mélasse fermenté (voir la figure 2 sur laquelle la courbe 3 correspond à la membrane connue et la courbe 4 à la membrane selon l'invention).

La présente invention présente notamment les avantages suivants :
- Toutes les couches de l'élément filtrant sont enrobées et non pas uniquement la couche de surface qui constitue la membrane.
- Il n'y a pas de modification de la structure géométrique du milieu poreux.
- Elle est applicable à différentes tailles de pores et à des éléments filtrate de formes diverses (tube, plan, multicanal).
- Bonne tenue aux variations de température en raison de la faible épaisseur du film.
- Amélioration des performances de filtration.

On peut noter par ailleurs que la membrane selon l'invention présente sensiblement les mêmes performances qu'une membrane qui serait constituée uniquement de zircone stabilisée ou non. Mais cette dernière serait, en raison des températures et durée de frittage nécessaires ainsi que du coût des matières premières, beaucoup plus coûteuse à obtenir.

## Revendications

1. Membrane de filtration en céramique comportant au moins principalement des grains d'alumine frittés qui sont fixés les uns aux autres par des parties "liées" de leurs surfaces et qui laissent entre eux des pores délimités par les parties restantes "exposées" de leurs surfaces, caractérisée par le fait que lesdites parties exposées des surfaces des grains sont recouvertes d'un film de zircone, continu d'un grain à l'autre et dont l'épaisseur est comprise entre 10 et 1000 nanomètres.

2. Membrane selon la revendication 1, caractérisée par le fait que ledit film de zircone contient de l'oxyde d'yttrium $Y_2O_3$ en proportion inférieure à 11% en mole par rapport à la zircone $ZrO_2$.

3. Procédé de fabrication d'une membrane de filtration selon la revendication 1, caractérisé par le fait que l'étape de formation dudit film de zircone comporte elle-même les étapes suivantes:
   — Réalisation d'une solution zirconifère contenant
   — un alcoolate de zirconium,
   — un plastifiant agent de réticulation du film de zircone, le poids de ce plastifiant étant compris entre 5% et 100% de celui dudit alcoolate de zirconium,
   — et un solvant constitué d'un alcool, le poids de ce solvant étant compris entre 3 et 20 fois celui de l'alcoolate de zirconium,
   — imprégnation de ladite structure de membrane en alumine par ladite solution zirconifère, de manière que les pores de cette structure soient remplis par cette solution,
   — et cuisson progressive de cette structure imprégnée de manière à éliminer tous les composants de ladite solution zirconifère sauf la zircone formée à partir de l'alcoolate de zirconium.

4. Procédé selon la revendication 3, caractérisé par le fait que ledit solvant est l'alcool source dudit alcoolate de zirconium.

5. Procédé selon la revendication 4, caractérisé par le fait que ledit alcool dudit alcoolate et dudit solvant est le n-butanol, ledit alcoolate étant le n-butylate de zirconium.

6. Procédé selon la revendication 3, caractérisé par le fait que ledit plastifiant est le triéthylène-glycol.

7. Procédé selon la revendication 3, caractérisé par le fait que ladite étape de cuisson progressive comporte elle-même les étapes suivantes:
– séchage à température sensiblement ambiante,
– montée lente en température jusqu'à 350°C environ, la vitesse de montée étant inférieure à 5 degrés Celsius par minute au moins dans les plages de température où se produit un dégagement de gaz provenant de l'évaporation ou de la décomposition des matières organiques de la solution zirconifère,
– montée à une température de cuisson comprise entre 350°C et 1200°C,
– maintien à la température de cuisson pendant au moins 10 minutes environ,
– et refroidissement.

**Claims**

1. A ceramic filter membrane comprising at least mainly grains of sintered alumina, which are fixed to one another by "bonded" portions of the grain surfaces while leaving pores therebetween which are surrounded by the remaining "exposed" portions of the grain surfaces, characterized in that said exposed portions of the grain surfaces are covered by a layer of zirconia, which is continuous from one grain to another and has a thickness comprised between 10 and 1000 nanometers.

2. A membrane according to claim 1, characterized in that said layer of zirconia contains yttrium oxide $Y_2O_3$ at a molar concentration of not more than 11% relative to the zirconia $ZrO_2$.

3. A method for manufacturing a filter membrane according to claim 1, characterized in that the phase of forming said layer of zirconia itself comprises the following steps:
– making a zirconiferous solution containing:
– an alcoholate of zirconium;
– a plasticizer for cross-linking of the film of zirconia, with the weight of the plasticizer lying between 5% and 100% of the weight of the zirconium alcoholate; and
– a solvent constituted by an alcohol, the weight of said solvent lying between three times and twenty times the weight of the zirconium alcoholate;
– impregnating said alumina membrane structure with said zirconiferous solution so as to cause the pores of said structure to be filled with said solution; and
– progressively baking said impregnated structure so as to remove all the components of said zirconiferous solution except for the zirconia which is formed from the zirconium alcoholate.

4. A method according to claim 3, characterized in that said solvent is the same alcohol as that on which said alcoholate is based.

5. A method according to claim 4, characterized in that said alcohol of said alcoholate and of said solvent is n-butanol, said alcoholate being zirconium n-butylate.

6. A method according to claim 3, characterized in that said plasticizer is triethylene-glycol.

7. A method according to claim 3, characterized in that said progressive baking step itself comprises the following steps:
– drying at substantially ambient temperature;
– slowly raising the temperature up to about 350°C with the rate of rise being less than 5° Celsius per minute at least in those temperature ranges where gases are released due to evaporation or decomposition of the organic materials in the zirconiferous solution;
– raising the temperature to a baking temperature lying between 350°C and 1200°C;
– maintaining the baking temperature for at least about ten minutes; and
– cooling.

**Patentansprüche**

1. Keramische Filtermembran mit hauptsächlich zumindest gesinterten Aluminiumoxidkörnern, die aneinander durch "verbundene" Bereiche ihrer Oberflächen fixiert sind und zwischen sich Poren belassen, welche durch die verbleibenden "exponierten" Bereiche begrenzt werden, dadurch gekennzeichnet, daß die exponierten Bereiche der Kornoberflächen mit einem von Korn zu Korn durchgehenden Zirkonoxidfilm bedeckt sind, dessen Dicke zwischen 10 und 1000 nm liegt.

2. Membran nach Anspruch 1, dadurch gekennzeichnet, daß der Zirkonoxidfilm Yttriumoxid $Y_2O_3$ in einem Anteil unter 11 Molprozenten bezogen auf Zirkonoxid $ZrO_2$ enthält.

3. Verfahren zur Herstellung einer Filtermembran nach Anspruch 1, dadurch gekennzeichnet, daß der Schritt der Bildung des Zirkonoxidfilmes seinerseits folgende Schritte umfaßt:
– Herstellen einer zirkonhaltigen Lösung mit
– einem Zirkonalkoholat,
– einem Weichmacher zur Vernetzung des Zirkonoxidfilmes, wobei das Gewicht des Weichmachers zwischen 5% und 100% des Zirkonalkoholats beträgt, und
– einem Lösungsmittel, das aus einem Alkohol besteht, wobei das Gewicht des Lösungsmittels zwischen dem 3- und dem 20fachen desjenigen des Zirkonalkoholats liegt,
– Tränken der Membranstruktur aus Aluminiumoxid mit der genannten zirkonhaltigen Lösung, derart, daß die Poren der Struktur mit der Lösung gefüllt werden, und
– progressives Ausheizen der getränkten Struktur, derart, daß alle Bestandteile der zirkonhaltigen Lösung bis auf das aus dem Zirkonalkoholat gebildete Zirkonoxid ausgeschieden werden.

4. Verfahren nach Anspruch 3, dadurch gekennzeichnet, daß das Lösungsmittel der als Grundlage des Zirkonalkoholats dienende Alkohol ist.

5. Verfahren nach Anspruch 4, dadurch gekennzeichnet, daß der Alkohol des Alkoholats und des Lösungsmittels n-Butanol ist, wobei das Alkoholat das n-Butylat des Zirkons ist.

6. Verfahren nach Anspruch 3, dadurch gekennzeichnet, daß der Weichmacher Triäthylen-Glykol ist.

7. Verfahren nach Anspruch 3, dadurch gekennzeichnet, daß das progressive Ausheizen seinerseits folgende Schritte aufweist:

– Trocknen bei im wesentlichen Umgebungstemperatur,

– langsames Steigern der Temperatur bis auf ungefähr 350°C, wobei die Anstiegsgeschwindigkeit unter 5°C pro Minute liegt, zumindest in denjenigen Temperaturbereichen, in denen eine Gasfreisetzung auf Grund der Verdampfung oder der Zersetzung der organischen Substanzen der zirkonhaltigen Lösung stattfindet,

– langsamer Temperaturanstieg auf eine Ausheiztemperatur zwischen 350°C und 1200°C,

– Halten der Ausheiztemperatur während mindestens ungefähr 10 Minuten, und

– Abkühlung.

# F I G . 1

# F I G . 2